(19) Europäisches Patentamt
European Patent Office
Office européen des brevets

(11) **EP 3 975 003 A1**

(12) **EUROPEAN PATENT APPLICATION**
published in accordance with Art. 153(4) EPC

(43) Date of publication:
**30.03.2022 Bulletin 2022/13**

(21) Application number: **20831138.1**

(22) Date of filing: **17.06.2020**

(51) International Patent Classification (IPC):
**G06F 16/23** (2019.01)

(52) Cooperative Patent Classification (CPC):
**G06F 16/23; G06F 16/29; G06F 16/587**

(86) International application number:
**PCT/CN2020/096505**

(87) International publication number:
**WO 2020/259361 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2019 CN 201910578745**

(71) Applicant: **GUANGDONG OPPO MOBILE
TELECOMMUNICATIONS
CORP., LTD.
Dongguan, Guangdong 523860 (CN)**

(72) Inventors:
• **JIN, Ke**
  **Dongguan, Guangdong 523860 (CN)**
• **YANG, Yuchen**
  **Dongguan, Guangdong 523860 (CN)**
• **CHEN, Yan**
  **Dongguan, Guangdong 523860 (CN)**
• **FANG, Pan**
  **Dongguan, Guangdong 523860 (CN)**

(74) Representative: **Ipside
7-9 Allées Haussmann
33300 Bordeaux Cedex (FR)**

(54) **MAP UPDATE METHOD AND APPARATUS, AND TERMINAL AND STORAGE MEDIUM**

(57) A map update method. The method comprises: acquiring a first image feature in a first map; matching a second image feature from a second map according to the first image feature, wherein scene information corresponding to the first map is partially the same as scene information corresponding to the second map; and adding each key frame image in the first image into the second map according to the first image feature and the second image feature so as to obtain an updated second map. Further provided are a map update apparatus, and a terminal and a storage medium.

```
         ┌─────────────────────────────────────────┐  S101
         │  A first image feature in a first map is acquired  │
         └─────────────────────────────────────────┘
                            │
                            ▼
         ┌─────────────────────────────────────────┐  S102
         │  according to the first image feature, a second image
         │  feature is matched from a second map     │
         └─────────────────────────────────────────┘
                            │
                            ▼
         ┌─────────────────────────────────────────┐  S103
         │  each key frame image in the first map is added into the
         │  second map according to the first image feature and the
         │  second image feature to obtain an updated second map  │
         └─────────────────────────────────────────┘
```

FIG. 1A

EP 3 975 003 A1

**Description**

**CROSS-REFERENCE TO RELATED APPLICATIONS**

Embodiments of the present application are submitted based on a Chinese Patent Application with an application No. 201910578745.9 and an application date of June 28, 2019, and claims priority of this Chinese Patent Application; the entire contents of this Chinese Patent Application are hereby incorporated into embodiments of the present application by reference.

**TECHNICAL FIELD**

The present application relates to indoor position technologies, which relate to but are not limited to a map update method and apparatus, a terminal, and a storage medium.

**BACKGROUND**

In the related art, a global map is constructed using histogram correlation of two local maps, but calculation of an angle offset and a translation offset of a histogram is dependent on normal phase characteristics of a point cloud; thus, since accuracy of the normal phase characteristics of the point cloud is not high, errors are prone to occur, which will lead to low accuracy of an obtained map.

**SUMMARY OF THE DISCLOSURE**

In view of this, in order to solve at least one problem existing in the related art, embodiments of the present application provide a map update method and apparatus, a terminal, and a storage medium.

Technical solutions of embodiments of the present application are implemented as follows.

An embodiment of the present application provides a map update method, the method comprises: acquiring a first image feature in a first map; matching a second image feature from a second map according to the first image feature, wherein scene information corresponding to the first map is partially the same as scene information corresponding to the second map; and adding each key frame image in the first map into the second map according to the first image feature and the second image feature to obtain an updated second map.

In the above method, the acquiring a first image feature in a first map comprises: extracting a key frame image to be matched in the first map and obtaining the first image feature; wherein the key frame image to be matched is a key frame image in the first map; correspondingly, the matching a second image feature from a second map according to the first image feature comprises: according to the first image feature, matching a second image feature from image features of a key frame image of the second map.

In the above method, the adding each key frame image in the first map into the second map according to the first image feature and the second image feature so as to obtain an updated second map comprises: acquiring first location information of an image capturing apparatus configured to capture the key frame image to be matched in a first coordinate system where the first map is located; determining second location information of the image capturing apparatus in a second coordinate system where the second map is located according to the first image feature and the second image feature; and adding each key frame image in the first map into the second map according to the first location information and the second location information to obtain an updated second map.

In the above method, the adding each key frame image in the first map into the second map according to the first location information and the second location information to obtain an updated second map comprises: determining a transformation relationship between the first coordinate system and a second coordinate system according to the first location information and the second location information; adjusting a coordinate of an image capturing apparatus corresponding to each key frame image in the first map in the first coordinate system according to the transformation relationship, such that an adjusted coordinate of an image capturing apparatus corresponding to each key frame image matches with the second coordinate system; and adding a key frame image corresponding to each image capturing apparatus with an adjusted coordinate into the second map to obtain the updated second map.

In the above method, scene information corresponding to the first map is at least partially the same as scene information corresponding to the second map.

In the above method, the first image feature comprises 2-Dimensional (2D) location information, 3-Dimensional (3D) location information, and identification information of feature points of a key frame image in the first map; the second image feature comprises 2D location information, 3D location information, and identification information of feature points of a key frame image in the second map; wherein the 3D location information is obtained by mapping the 2D location information into a coordinate system where the 2D location information is located.

In the above method, the extracting a key frame image in the first map and obtaining the first image feature comprises: extracting feature points of each key frame image in the first map to obtain a feature point set; determining identification information of each feature point in the feature point set and 2D location information of each feature point in the key frame image; and respectively mapping each 2D location information into a coordinate system where the first map is located to obtain 3D location information of each feature point.

In the above method, the according to the first image feature, matching a second image feature from image features of a key frame image of the second map comprises: respectively determining ratios occupied by different sample feature points in the feature point set to obtain a first ratio vector; acquiring a second ratio vector, wherein the second ratio vector is a ratio occupied by the plurality of sample feature points in feature points included in a key frame image of the second map; and according to the first image feature, the first ratio vector, and the second vector, matching a second image feature from image features of a key frame image of the second map.

In the above method, the according to the first image feature, the first ratio vector, and the second vector, matching a second image feature from image features of a key frame image of the second map comprises: according to the first ratio vector and the second ratio vector, determining a similar image feature of which similarity with the first image feature is greater than a second threshold value from image features of a key frame image of the second map; determining a similar key frame image to which the similar image feature belongs and obtaining a similar key frame image set; and selecting a second image feature of which similarity with the first image feature meets a preset similarity threshold value from image features of the similar key frame image.

In the above method, the selecting a second image feature of which similarity with the first image feature meets a preset similarity threshold value from image features of the similar key frame image comprises: determining a time difference between captured time of at least two similar key frame images, and similarity differences of image features of the at least two similar key frame images respectively relative to the first image feature; associating similar key frame images of which the time differences are less than a third threshold value and the similarity differences are less than a fourth threshold value to obtain an associated frame image; and selecting a second image feature of which similarity with the first image feature meets a preset similarity threshold value from image features of the associated frame image.

In the above method, the selecting a second image feature of which similarity with the first image feature meets a preset similarity threshold value from image features of the associated frame image comprises: respectively determining a sum of similarity between an image feature of each key frame image included in a plurality of associated frame images and the first image feature; determining an associated frame image of which the sum of similarity is the greatest as a target associated frame image of which similarity with the key frame image to be matched is the highest; and according to identification information of feature points of the target associated frame image and identification information of feature points of the key frame image to be matched, selecting a second image feature of which similarity with the first image feature meets a preset similarity threshold value from image features of the target associated frame image.

In the above method, prior to the determining second location information of the image capturing apparatus in a second coordinate system where the second map is located according to the first image feature and the second image feature, the method further comprises: determining a target Euclidean distance being less than a first threshold value between every two feature points included in a key frame image corresponding to the second image feature to obtain a target Euclidean distance set; correspondingly, the determining second location information of the image capturing apparatus in a second coordinate system where the second map is located according to the first image feature and the second image feature comprises: if the number of target Euclidean distances included in the target Euclidean distance set is greater than a fifth threshold value, determining the second location information according to 3D location information of feature points of a key frame image corresponding to the second image feature and 2D location information of feature points of a key frame image corresponding to the first image feature.

In the above method, prior to the extracting a key frame image in the first map and obtaining the first image feature, the method further comprises: selecting key frame images meeting preset conditions from a sample image library to obtain a key frame image set; extracting image features of each key frame image to obtain a key image feature set; extracting feature points of sample images to obtain a sample feature point set including different feature points; determining a ratio of each sample feature point in a key frame image to obtain a ratio vector set; and storing the ratio vector set and the key image feature set to obtain the first map.

In the above method, prior to the selecting key frame images meeting preset conditions from a sample image library to obtain a key frame image set, the method further comprises: selecting a preset number of corner points from the sample images; if the number of identical corner points included in two sample images with adjacent captured time is greater than or equal to a sixth threshold value, determining that scenes corresponding to the sample images are continuous scenes; and if the number of identical corner points included in two sample images with adjacent captured time is less than the sixth threshold value, determining that scenes corresponding to the sample images are discrete scenes.

In the above method, the selecting key frame images meeting preset conditions from a sample image library to obtain a key frame image set comprises: if scenes corresponding to the sample images are discrete scenes, selecting key frame images from the sample image library according to an input selecting instruction; and if the scenes corresponding to the sample images are continuous scenes, selecting key frame images from the sample image library according to a preset frame rate or parallax displacement.

In the above method, the determining a ratio of each sample feature point in a key frame image to obtain a ratio vector set comprises: determining a first average number of times according to a first quantity of sample images included in the sample image library and a first number of times of appearance of an ith sample feature point in the sample image library; wherein i is an integer being greater than or equal to 1, and the first average number of times is configured to represent an average number of times of appearance of the ith sample feature point in each sample image; determining a second average number of times according to a second number of times of appearance of the ith sample feature point in a jth key frame image and a second quantity of sample feature points included in the jth key frame image; wherein j is an integer being greater than or equal to 1, and the second average number of times is configured to represent a ratio of the ith sample feature point in sample feature points included in the jth key frame image; and according to the first average number of times and the second average number of times, obtaining a ratio of the sample feature points in the key frame images, and obtaining the ratio vector set.

One embodiment of the present application provides a map update apparatus, the apparatus comprises a first acquiring module, a first mapping module, and a first updating module; wherein: the first acquiring module is configured to acquire a first image feature in a first map; the first matching module is configured to match a second image feature from a second map according to the first image feature, wherein scene information corresponding to the first map is partially the same as scene information corresponding to the second map; and the first updating module is configured to add each key frame image in the first map into the second map according to the first image feature and the second image feature to obtain an updated second map.

In the above apparatus, the first acquiring module comprises: a first extracting submodule configured to extract a key frame image to be matched in the first map and obtain the first image feature; wherein the key frame image to be matched is a key frame image in the first map; correspondingly, the first matching module comprises: a first matching submodule configured to match a second image feature from image features of a key frame image of the second map according to the first image feature.

In the above apparatus, the first updating module comprises: a first acquiring module configured to acquire first location information of an image capturing apparatus configured to capture the key frame image to be matched in a first coordinate system where the first map is located; a first determining submodule configured to determine second location information of the image capturing apparatus in a second coordinate system where the second map is located according to the first image feature and the second image feature; and a first updating submodule configured to add each key frame image in the first map into the second map according to the first location information and the second location information to obtain an updated second map.

In the above apparatus, the first updating submodule comprises: a first determining unit configured to determine a transformation relationship between the first coordinate system and a second coordinate system according to the first location information and the second location information; a first adjusting unit configured to adjust a coordinate of an image capturing apparatus corresponding to each key frame image in the first map in the first coordinate system according to the transformation relationship, such that an adjusted coordinate of an image capturing apparatus corresponding to each key frame image matches with the second coordinate system; and a first adding unit configured to add a key frame image corresponding to each image capturing apparatus with an adjusted coordinate into the second map to obtain the updated second map.

In the above apparatus, scene information corresponding to the first map is at least partially the same as scene information corresponding to the second map.

In the above apparatus, the first image feature comprises 2D location information, 3D location information, and identification information of feature points of a key frame image in the first map; the second image feature comprises 2D location information, 3D location information, and identification information of feature points of a key frame image in the second map; wherein the 3D location information is obtained by mapping the 2D location information into a coordinate system where the 2D location information is located.

In the above apparatus, the first extracting submodule comprises: a first extracting unit configured to extract feature points of each key frame image in the first map to obtain a feature point set; a second determining unit configured to determine identification information of each feature point in the feature point set and 2D location information of each feature point in the key frame image; and a first mapping unit configured to respectively map each 2D location information into a coordinate system where the first map is located to obtain 3D location information of each feature point.

In the above apparatus, the first matching submodule comprises: a third determining unit configured to respectively determine ratios occupied by different sample feature points in the feature point set to obtain a first ratio vector; a first acquiring unit configured to acquire a second ratio vector, wherein the second ratio vector is a ratio occupied by the plurality of sample feature points in feature points included in a key frame image of the second map; and a first matching unit configured to match a second image feature from image features of a key frame image of the second map according to the first image feature, the first ratio vector, and the second vector.

In the above apparatus, the first matching unit comprises: a first determining subunit configured to determine a similar image feature of which similarity with the first image feature being greater than a second threshold value from image features of a key frame image of the second map according to the first ratio vector and the second ratio vector; a second determining subunit configured to determine a similar key frame image to which the similar image feature belongs and obtain a similar key frame image set; and a first selecting subunit configured to select a second image feature of which similarity with the first image feature meets a preset similarity threshold value from image features of the similar key frame image.

In the above method, the first selecting subunit is configured to: determine a time difference between captured time of at least two similar key frame images, and similarity differences of image features of the at least two similar key frame images respectively relative to the first image feature; associate similar key frame images of which the time differences are less than a third threshold value and the similarity differences are less than a fourth threshold value to obtain an associated frame image; and select a second image feature of which similarity with the first image feature meets a preset similarity threshold value from image features of the associated frame image.

In the above method, the first selecting subunit is configured to: respectively determine a sum of similarity between an image feature of each key frame image included in a plurality of associated frame images and the first image feature; determine an associated frame image of which the sum of similarity is the greatest as a target associated frame image of which similarity with the key frame image to be matched is the highest; and according to identification information of feature points of the target associated frame image and identification information of feature points of the key frame image to be matched, select a second image feature of which similarity with the first image feature meets a preset similarity threshold value from image features of the target associated frame image.

In the above apparatus, the apparatus further comprises: a first determining module configured to determine a target Euclidean distance being less than a first threshold value between every two feature points included in a key frame image corresponding to the second image feature to obtain a target Euclidean distance set; correspondingly, the first determining submodule comprises: a fourth determining module configured to: if the number of target Euclidean distances included in the target Euclidean distance set is greater than a fifth threshold value, determine the second location information according to 3D location information of feature points of a key frame image corresponding to the second image feature and 2D location information of feature points of a key frame image corresponding to the first image feature.

In the above apparatus, the apparatus further comprises: a first selecting module configured to select key frame images meeting preset conditions from a sample image library to obtain a key frame image set; a first extracting module configured to extract image features of each key frame image to obtain a key image feature set; a second extracting module configured to extract feature points of sample images to obtain a sample feature point set including different feature points; a second determining module configured to determine a ratio of each sample feature point in a key frame image to obtain a ratio vector set; and a first storing module configured to store the ratio vector set and the key image feature set to obtain the first map.

In the above apparatus, the apparatus further comprises: a second selecting module configured to select a preset number of corner points from the sample images; a third determining module configured to: if the number of identical corner points included in two sample images with adjacent captured time is greater than or equal to a sixth threshold value, determine that scenes corresponding to the sample images are continuous scenes; and a fourth determining module configured to: if the number of identical corner points included in two sample images with adjacent captured time is less than the sixth threshold value, determine that scenes corresponding to the sample images are discrete scenes.

In the above apparatus, the first selecting module comprises: a first selecting submodule configured to: if scenes corresponding to the sample images are discrete scenes, select key frame images from the sample image library according to an input selecting instruction; and a second selecting submodule configured to: if the scenes corresponding to the sample images are continuous scenes, select key frame images from the sample image library according to a preset frame rate or parallax displacement.

In the above apparatus, the second determining module comprises: a second determining submodule configured to determine a first average number of times according to a first quantity of sample images included in the sample image library and a first number of times of appearance of an ith sample feature point in the sample image library; wherein i is an integer being greater than or equal to 1, and the first average number of times is configured to represent an average number of times of appearance of the ith sample feature point in each sample image; a third determining submodule configured to determine a second average number of times according to a second number of times of appearance of the ith sample feature point in a jth key frame image and a second quantity of sample feature points included in the jth key frame image; wherein j is an integer being greater than or equal to 1, and the second average number of times is configured to represent a ratio of the ith sample feature point in sample feature points included in the jth key frame image; and a fourth determining module configured to: according to the first average number of times and the second average number of times, obtain a ratio of the sample feature points in the key frame images, and obtain the ratio vector set.

One embodiment of the present application further provides a terminal comprising a memory and a processor; the memory stores a computer program that can be run in the processor, and the processor, when executing the program, implements the operations in the above map update methods.

One embodiment of the present application further provides a computer readable storage medium which stores a computer program; the computer program, when being executed by a processor, implements the operations in the above map update methods.

Embodiments of the present application provides a map update method and apparatus, a terminal, and a storage medium; wherein, at first, a first image feature in a first map is acquired; afterwards, a second image feature is matched from a second map according to the first image feature; and finally, each key frame image in the first map is added into the second map according to the first image feature and the second image feature to obtain an updated second map. In this way, by extracting an image feature of a key frame image in a first map in local maps and matching the image feature with an image feature of a key frame image in another map, a key frame image corresponding to a second image feature can be obtained. Thus, based on matched image features in different maps, a plurality of maps are merged, so as to implement map updating and improve precision of updated maps.

## BRIEF DESCRIPTION OF THE DRAWINGS

FIG. 1A is a schematic flow chart of implementation of a map update method according to an embodiment of the present application.
FIG. 1B is another schematic flow chart of implementation of a map update method according to an embodiment of the present application.
FIG. 2A is a schematic flow chart of implementation of a map update method according to an embodiment of the present application.
FIG. 2B is another schematic flow chart of implementation of creating a preset map according to an embodiment of the present application.
FIG. 2C is another schematic flow chart of implementation of a map update method according to an embodiment of the present application.
FIG. 3 is another schematic flow chart of implementation of a map update method according to an embodiment of the present application.
FIG. 4 is a structural schematic diagram of ratio vectors according to an embodiment of the present application.
FIG. 5A is a diagram of an application scene for determining a key frame image corresponding to a second image feature according to an embodiment of the present application.
FIG. 5B is a structural schematic diagram of determining position information of a capturing device according to an embodiment of the present application.
FIG. 6 is a structural schematic diagram of composition of a map update apparatus according to an embodiment of the present application.

## DETAILED DESCRIPTION

Technical solutions in embodiments of the present application will be described clearly and entirely below in accompany with drawings in the embodiments of the present application.

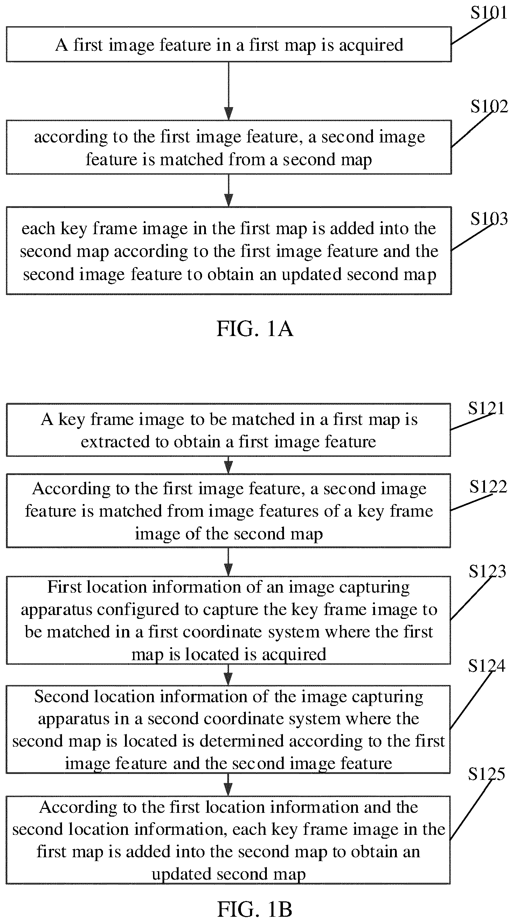

One embodiment of the present application provides a map update method. FIG. 1A is a schematic flow chart of implementation of a map update method according to an embodiment of the present application. As shown in FIG. 1A, the method includes the following operations.

Operation S101, a first image feature in a first map is acquired.

Herein, the first map can be considered as a part of a global map. For example, if the global map contains key frame images corresponding to 100 indoor scenes, the first map may contain key frame images corresponding to some of the indoor scenes. The first image feature includes: 2D location information, 3D location information, and identification information of feature points of the key frame images in the first map. In the operation S101, first, the feature points of each key frame image in the first map are extracted to obtain a feature point set; then the identification information of each feature point in the feature point set and the 2D location information of each feature point in the key frame image are determined, wherein the identification information of the feature point can be regarded as descriptor information that can identify the feature point uniquely; finally, each 2D location information is respectively mapped in a coordinate system where the first map is located, and the 3D location information of each feature point is obtained.

Operation S102, according to the first image feature, a second image feature is matched from a second map.

Herein, the first map and the second map are two different maps, and scene information corresponding to the first map and the second map are partially the same, so as to ensure that a second image feature of which similarity with a first image feature of a key frame image in the first map is high can be matched from the second map. The second map can also be understood as a part of a global map, for example, the global map contains key frame images corresponding to 100 indoor scenes, then the second map may contain key frame images corresponding to some of the indoor scenes. The scene information corresponding to the first map and the second map are at least partially the same; that is, there is a slight overlap between the first map and the second map. The second image feature includes: 2D location information, 3D location information, and identification information of feature points of the key frame image in the second map; wherein, the 3D location information is obtained by mapping the 2D position information in a coordinate system where the 2D position information is located. The step S102 can be understood as selecting a second image feature with a higher degree of matching with the first image feature from the image features of the key frame image stored in the second map.

Operation S103, each key frame image in the first map is added into the second map according to the first image feature and the second image feature to obtain an updated second map.

Herein, location information of the image capture device of the key frame image corresponding to the first image feature is determined based on the 3D location information of the feature points of the key frame image corresponding to the second image feature and the 2D location information of the feature points of the key frame image corresponding to the first image feature. For example, first, the 2D location information of the feature points of the key frame image corresponding to the first image feature is converted into 3D location information, and then the 3D location information is compared with 3D location information of feature points of a key frame image in a second coordinate system where the second map is located to determine the location information of the image capturing apparatus of the key frame image corresponding to the first image feature. In this way, the 2D position information and the 3D position information of the feature points are considered at the same time; thus, when the key frame image corresponding to the first image feature is located, not only can the 2D location information of the image capturing apparatus of the key frame image to be matched corresponding to the first image feature be obtained, but also the 3D position information of the image capturing apparatus of the key frame image corresponding to the first image feature can be obtained. It can also be understood that, not only can a planar space location of the image capturing apparatus be obtained, but also a three-dimensional space location of the image capturing apparatus can be obtained. In this way, based on the rich location information, multiple local maps can be merged together more accurately.

In this embodiment of the present application, regarding any key frame image in the first map, by extracting an image feature, firstly, the second image feature matching the image feature is found from the second map; secondly, based on the location information of the feature points of the two image features, and finally, based on the conversion relationship between the location information of the image features and the coordinate systems respectively corresponding to the two maps, each key frame image in the first map is added to the second map, thereby completing update of the second map and ensuring a good map merging accuracy.

One embodiment of the present application provides a map update method. FIG. 1B is another schematic flow chart of implementation of a map update method according to an embodiment of the present application. As shown in FIG. 1B, the method includes the following operations.

Operation S121, a key frame image to be matched in a first map is extracted to obtain a first image feature.

Herein, the key frame image to be matched is a key frame image in the first map.

Operation S122, according to the first image feature, a second image feature is matched from image features of a key frame image of the second map.

Herein, a preset word bag model is used to retrieve a second image feature of which similarity with the first image feature is high from the image features of the key frame image stored in the second map.

Operation S123, first location information of an image capturing apparatus configured to capture the key frame image to be matched in a first coordinate system where the first map is located is acquired.

Herein, the first coordinate system can be a 3D coordinate system, and the first location information can be regarded as a 3D coordinate value of the image capturing apparatus for the key frame image to be matched in the first coordinate system.

Operation S124, second location information of the image capturing apparatus in a second coordinate system where the second map is located is determined according to the first image feature and the second image feature.

Herein, first, the second coordinate system where the second map is located is obtained, the second coordinate system is a three-dimensional coordinate system; thus, based on the 3D position information of the feature points of the key frame image corresponding to the second image feature and the 2D location information of the feature points of the key frame image corresponding to the first image feature, the second location information is determined. The second position information can be regarded as a 3D coordinate value of the image capturing apparatus for the key frame image to be matched in the second coordinate system. For example, the 3D position information of the feature points of the key frame image corresponding to the second image feature and the 2D position information of the feature points of the key frame image corresponding to the first image feature are used as input of the front-end pose tracking algorithm (Perspectives-n-Point, PnP): first, the 2D position information (for example, 2D coordinates) of the feature points in the key frame image to be matched and the 3D location information (for example, 3D coordinates) of the feature points in the first coordinate system are acquired, and then according to the 3D position information of the feature points corresponding to the second feature in the second coordinate system and the 3D position information of the feature points in the key frame image to be matched in the first coordinate system, the location information the image capturing apparatus for the key frame image to be matched can be sought.

Operation S125, according to the first location information and the second location information, each key frame image in the first map is added into the second map to obtain an updated second map.

Herein, the updated second map can be a global map, and can also be a part of a global map. The operation 125 can be implemented by the following process.

In a first step, a transformation relationship between the first coordinate system and a second coordinate system is determined according to the first location information and the second location information.

Herein, the transformation relationship between the first coordinate system and a second coordinate system can be a rotation matrix and a translation vector of the first coordinate system relative to the second coordinate system.

In a second step, a coordinate of an image capturing apparatus corresponding to each key frame image in the first map in the first coordinate system is adjusted according to the transformation relationship, such that an adjusted coordinate of an image capturing apparatus corresponding to each key frame image matches with the second coordinate system.

Herein, a process of adjusting a coordinate of an image capturing apparatus corresponding to each key frame image in the first map in the first coordinate system according to the transformation relationship may be: first, using a rotation matrix to rotate the coordinate of the image capturing apparatus corresponding to each key frame image in the first coordinate system; then using the translation vector to translate the rotated coordinate of the image capturing apparatus corresponding to each key frame image in the first coordinate system, so as to obtain an adjusted coordinate of the image capturing apparatus corresponding to each key frame image.

In a third step, a key frame image corresponding to each image capturing apparatus with an adjusted coordinate is added into the second map to obtain the updated second map.

Herein, since the coordinate of the image capturing apparatus corresponding to each key frame image in the first coordinate system has been adjusted to be a coordinate matching with the second coordinate system, based on this, it is possible to add each key frame image in the first map into the second map to realize merging of the two maps and obtain the update second map (i.e., a global map). In other embodiments, it is also possible to merge three or more maps to obtain a global map.

The above operation S123 to operation S125 provide a method of realizing "adding each key frame image in the first map is added into the second map according to the first location information and the second location information to obtain an updated second map". In this method, based on respective location information of an image capturing apparatus for a key frame to be matched in a first coordinate system and in a second coordinate system, a transformation relationship between the first coordinate system and the second coordinate system is determined; then a coordinate of an image capturing apparatus corresponding to each key frame image in the first map in the first coordinate system is adjusted according to the transformation relationship; in this way, the coordinate of the image capturing apparatus corresponding to each key frame image in the first map in the first coordinate system is matched with the second coordinate system, such that a key frame image corresponding to the adjusted image capturing apparatus is added into the second map, and thus the two maps are accurately merged together.

In this embodiment of the present application, by image features of key frame images in two local maps, a plurality of local maps are merged to achieve the purpose of updating maps, such that the updated map has high merging accuracy and strong robust.

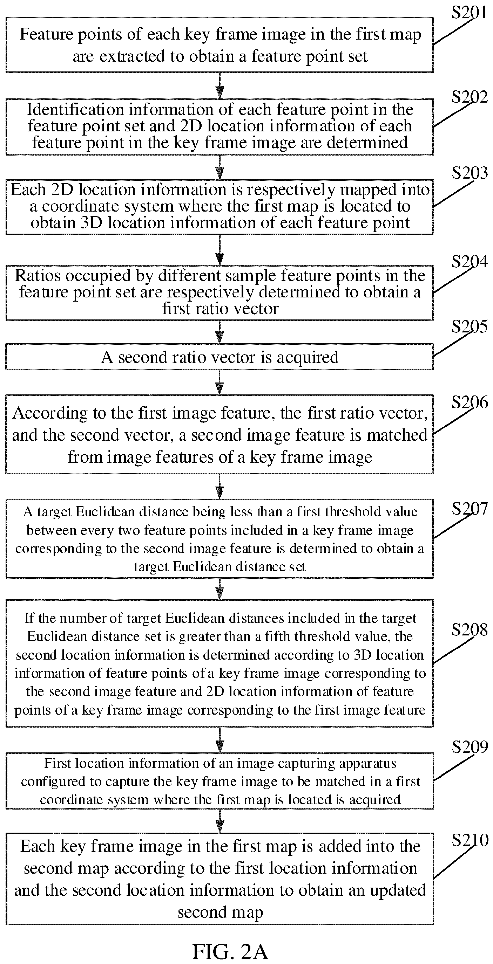

One embodiment of the present application provides a map update method. FIG. 2A is a schematic flow chart of implementation of a map update method according to an embodiment of the present application. As shown in FIG. 2A, the method includes the following operations.

Operation S201, feature points of each key frame image in the first map are extracted to obtain a feature point set.

Herein, feature points of each key frame image in the first map are extracted to obtain a feature point set.

Operation S202, identification information of each feature point in the feature point set and 2D location information of each feature point in the key frame image are determined.

Herein, for each feature point in the feature point set, descriptor information (i.e., identification information) of the feature point is determined; the 2D location information can be considered as a 2D coordinate of the feature point.

Operation S203, each 2D location information is respectively mapped into a coordinate system where the first map is located to obtain 3D location information of each feature point.

The above operation S201 to operation S203 provide a method of realizing "extracting a key frame image in the first map to obtain a feature point set"; in this method, a 2D coordinate of each feature point of a key frame image of the first map, and descriptor information and a 3D coordinate of the feature point are obtained.

Operation S204, ratios occupied by different sample feature points in the feature point set are respectively determined to obtain a first ratio vector.

Herein, the first ratio vector can be stored in a preset word bag model corresponding to the first map in advance. When the image feature of the key frame image to be matched in the first map needs to be matched, the first ratio vector is obtained from the preset word bag model. The plurality of sample feature points are different from each other. The preset word bag model includes a plurality of different sample feature points and a ratio occupied by the plurality of sample feature points in feature points included in the key frame image. The first ratio vector may be determined based on the number of sample images, the number of times of appearance of the sample feature points in the sample images, the number of times of appearance of the sample feature points in the key frame image to be matched, and the total number of the sample feature points appearing in the key frame image to be matched; as shown in formula (1):

$$v_t^i = tf(i, I_t) \cdot idf(i)$$

$$idf(i) = \log \frac{N}{n_i}, tf(i, I_t) = \frac{n_{iI_t}}{n_{I_t}} \qquad (1);$$

wherein, $N$ is the number of the sample images (i.e., a first quantity), $n_i$ is the number of times of appearance of the sample feature points $w_i$ in the sample images (i.e., a first number of times), $I_t$ is an image $I$ captured on time $t$, $n_{iIt}$ is the number of times of appearance of the sample feature points $w_i$ in the key frame image It captured on the time $t$ (i.e., a second number of times), and $n_{It}$ is the total number of the sample feature points appearing in the key frame image It (i.e., a second quantity). By scoring the sample feature points, a $w$ dimensional floating-point number vector, that is, a ratio vector, of each key frame image is obtained, and the ratio vector can also be used as feature information of the preset word bag model.

Operation S205, a second ratio vector is acquired.

Herein, the second ratio vector is a ratio occupied by the plurality of sample feature points in feature points included in a key frame image of the second map; the second ratio vector is stored in the preset word bag model in advance, therefore, when the image features of the key frame image to be matched needs to be matched, the second ratio vector is acquired from the preset word bag model. A determining process of the second ratio vector is similar to the determining process of the first ratio vector, and both of them can use the formula (1) to determine; furthermore, the number of dimensions of the first ratio vector and is the same as that of the second ratio vector.

Operation S206, according to the first image feature, the first ratio vector, and the second vector, a second image feature is matched from image features of a key frame image.

Herein, the operation S206 can be realized by the following process.

In a first step, according to the first ratio vector and the second ratio vector, a similar image feature of which similarity with the first image feature is greater than a second threshold value is determined from image features of a key frame image of the second map.

Herein, the first ratio vector of the key frame image to be matched is compared one by one with the second ratio vector of each key frame image in the second map, and the two ratio vectors are used to perform calculation as shown in the formula (2), and thus similarity of each key frame image in the second map with the key frame image to be matched can be determined, such that similar key frame images of which similarities are greater than or equal to the second threshold value are selected, and a similar key frame image set is obtained.

In a second step, a similar key frame image to which the similar image feature belongs is determined and a similar key frame image set is obtained.

In a third step, a second image feature of which similarity with the first image feature meets a preset similarity threshold value is selected from image features of the similar key frame image.

Herein, a second image feature with the highest similarity with the first image feature is selected from the image features included in the similar key frame image. For example, first, a time difference between captured time of at least two similar key frame images, and similarity differences of image features of the at least two similar key frame images respectively relative to the first image feature are determined; thus, similar key frame images of which the time differences are less than a third threshold value and the similarity differences are less than a fourth threshold value are associate to obtain an associated frame image. That is, the selected are a plurality of similar key frame images of which captured time is close and similarities with the key frame image to be matched are close, which represents that these key frame images may be successive pictures, therefore such multiple similar key frame images are associated together to form the associated frame image (and may also become an island); in this way, a plurality of associated frame images are obtained; finally, a second image feature of which similarity with the first image feature meets a preset similarity threshold value is selected from image features of the associated frame images. For example, a sum of similarity between an image feature of each key frame image included in a plurality of associated frame images and the first image feature is respectively determined; in this way, a sum of similarities between image features of a plurality of key frame images included in the plurality of associated frame images and the first image feature is determined one by one. Thus, an associated frame image of which a sum of similarity is the greatest is determined as a target associated frame image of which similarity with the key frame image to be matched is the highest; and finally, according to identification information of feature points of the target associated frame image and identification information of feature points of the key frame image to be matched, a second image feature of which similarity with the first image feature meets a preset similarity threshold value is selected from image features of the target associated frame image. In this way, since the identification information of feature points of the target associated frame image and the identification information of feature points of the key frame image to be matched can respectively identify the feature points of the target associated frame image and the feature points of the key frame image to be matched uniquely, based on the two identification information, a second image feature with the highest similarity with the first image feature can be selected very accurately from the image features of the target associated frame image. Thus, accuracy of matching the first image feature of the key frame image to be matched with the second image feature is ensured, and it is further ensured that similarity between the selected second image feature and the first image feature is very high. In this embodiment, a key frame image containing the second image feature represents that the key frame image is very similar to the key frame image to be matched and can be considered as the most similar image with the key frame image to be matched.

The above operation S204 to operation S206 provide a method of realizing "matching the second image feature from image features of a key frame image in the second map according to the first image feature". In this method, by adopting the preset word bag model, the second image feature matching with the first image feature is retrieved from the image features of a key frame image in the second map, so as to ensure similarity between the second image feature and the first image feature.

Operation S207, a target Euclidean distance being less than a first threshold value between every two feature points included in a key frame image corresponding to the second image feature is determined to obtain a target Euclidean distance set.

Herein, first, an Euclidean distance between every two feature points included in a key frame image corresponding to the second image feature is determined; then Euclidean distances being less than a first threshold value are selected therefrom and used as target Euclidean distances, so as to obtain a target Euclidean distance set; at this time, processing one feature point in the key frame image to be matched can obtain one target Euclidean distance set, and thus processing multiple feature points in the key frame image to be matched can obtain multiple target Euclidean distance sets. The target Euclidean distance being less than the first threshold value can also be considered as that: first, the minimum Euclidean distance is determined from multiple Euclidean distances, and it is determined whether the minimum Euclidean distance is less than the first threshold value; if being less, it is determined that the minimum Euclidean distance is a target Euclidean distance, and thus the target Euclidean distance set is a set of which an Euclidean distance is the minimum in the multiple Euclidean distance sets.

Operation S208, if the number of target Euclidean distances included in the target Euclidean distance set is greater than a fifth threshold value, the second location information is determined according to 3D location information of feature points of a key frame image corresponding to the second image feature and 2D location information of feature points of a key frame image corresponding to the first image feature.

Herein, if the number of target Euclidean distances included in the target Euclidean distance set is greater than a fifth threshold value, it indicates that the number of target Euclidean distances is adequately large, also indicates that feature points matching with the first image feature are adequately many, and further indicates that similarity between the key frame image including the second image feature and the key frame image to be matched is adequately high. Thus, the 3D location information of feature points of a key frame image of the second image feature and 2D location information of feature points of a key frame image to be matched corresponding to the first image feature are used as input of the PnP algorithm, 2D coordinates of feature points of a current frame of the key frame image to be matched and 3D coordinates of the feature points in a current coordinate system are first calculated, and then location information of an image capturing apparatus can be calculated according to 3D location information of feature points of a key frame image in a map coordinate system and 3D location information of feature points in a current frame of a key frame image to be matched in the current coordinate system.

The above operation S206 to operation S208 provide a method of realizing "determining second location information of an image capturing apparatus in a second coordinate system where the second map is located according to the first image feature and the second image feature". In this method, both 2D and 3D location information of a key frame image is considered, and both a location and a posture can be provided in a positioning result; therefore, accuracy of determining a location of the image capturing apparatus is improved, such that the coordinate of the image capturing apparatus for the key frame image in the first map can be transformed effectively, the key frame image in the first map is better merged into the second map, so as to ensure merging accuracy and robust of the maps.

**EP 3 975 003 A1**

Operation 209, first location information of an image capturing apparatus configured to capture the key frame image to be matched in a first coordinate system where the first map is located is acquired.

Herein, an image capturing apparatus corresponding to each key frame image in the first map has first location information, the first location information can be considered as a coordinate value of the image capturing apparatus in the first coordinate system.

Operation 210, each key frame image in the first map is added into the second map according to the first location information and the second location information to obtain an updated second map.

In this embodiment of the present application, the key frame image to be matched is obtained through the image capturing apparatus; the constructed preset map is loaded, and the key frame image corresponding to the second image feature corresponding to the key frame image to be matched is retrieved and matched using the preset word bag model. Finally, the 2D location information of the feature points of the key frame image to be matched and the 3D location information of the feature points of the key frame image are used as the input of the PnP algorithm to obtain a position of a current camera for the key frame image to be matched in the second map; thus, the coordinates of the image capturing apparatus corresponding to the key frame image in the first map are all converted into coordinates that match the second coordinate system of the second map, and then the key frame image in the first map is accurately merged into the second map; in this way, a coordinate of the image capturing apparatus corresponding to the key frame image in the first map in the second coordinate system of the second map can be determined through the key frame image, such that the two maps are more accurately merged together to get an updated second map. There is no need for two local maps to have a large number of overlapping areas, and good map merging accuracy can be ensured. When performing map update by crowdsourcing or creating a map by multiple persons, stability of map merging is improved, and efficiency of constructing local maps is also improved.

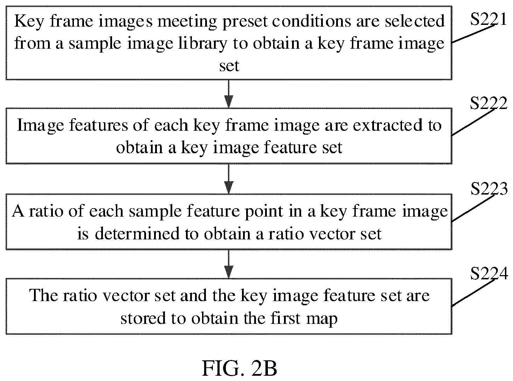

One embodiment of the present application provides a map update method. FIG. 2B is another schematic flow chart of implementation of creating a preset map according to an embodiment of the present application, as shown in FIG. 2B, the method includes the following operations.

Operation S221, key frame images meeting preset conditions are selected from a sample image library to obtain a key frame image set.

Herein, first, whether scenes corresponding to sample images are continuous scenes or discrete scenes are determined. If they are discrete scenes, the process is as follows.

In a first step, a preset number of corner points are selected from the sample images; the corner points are pixel points in the sample images having big differences from a preset number of ambient pixel points, for example, 150 corner points are selected.

In a second step, if the number of identical corner points included in two sample images with adjacent captured time is greater than or equal to a sixth threshold value, it is determined that scenes corresponding to the sample images are continuous scenes. The two sample images with adjacent captured time can be considered as two successive sample images, and the number of identical corner points included in the two sample images is determined; the larger the number, the higher the correlation between the two sample images, and it is indicated that the two sample images are images coming from continuous scenes. The continuous scenes can be, for example, single indoor environments, such as a bedroom, a living room, a single conference room, etc.

In a third step, if the number of identical corner points included in two sample images with adjacent captured time is less than the sixth threshold value, it is determined that scenes corresponding to the sample images are discrete scenes. The less the number of identical corner points included in the two sample images, the lower the correlation between the two sample images, and it is indicated that the two sample images are images coming from discrete scenes. The continuous scenes can be, for example, in multiple indoor environments, such as multiple rooms in a building, multiple conference rooms on one floor, etc.

Thus, if the scenes corresponding to the sample images are discrete scenes, key frame images are selected from the sample image library according to input selecting instruction; that is, if the sample images belong to discrete scenes, it is indicated that the multiple sample images do not correspond to the same scene, therefore a user manually selects key frame image. In this way, effectivity of the selected key frame images in different environments are ensured.

If the scenes corresponding to the sample images are continuous scenes, key frame images are selected from the sample image library according to a preset frame rate or parallax displacement; that is, if the sample images belong to continuous scenes, it is indicated that the multiple sample images correspond to the same scene; therefore, by setting a preset frame rate or a preset parallax displacement in advance, sample images meeting the preset frame rate or the preset parallax displacement are automatically selected as key frame images. In this way, not only is effectivity of the selected key frame images ensured, but also efficiency of selecting the key frame images is improved.

Operation S222, image features of each key frame image are extracted to obtain a key image feature set.

Herein, the image features of each key frame image include 2D location information and 3D location information of feature points of the key frame image, and identification information that can identify the feature points uniquely. The key image feature set is obtained, so as to facilitate matching the second image feature being highly similar with the first image feature from the key image feature set, and thereby obtaining the key frame image corresponding to the corresponding second image feature.

Operation S223, a ratio of each sample feature point in a key frame image is determined to obtain a ratio vector set.

Herein, after the ratio vector set is obtained, different sample points and the ratio vector set are stored in a preset word bag model, so as to facilitate adopting the preset word bag model to retrieve the key frame image corresponding to the second image feature of the key frame image to be matched from the key frame images. The operation S223 can be implemented by the following process.

First, a first average number of times is determined according to a first quantity of sample images included in the sample image library and a first number of times of appearance of an ith sample feature point in the sample image library; wherein i is an integer being greater than or equal to 1, and the first average number of times is configured to represent an average number of times of appearance of the ith sample feature point in each sample image; for example, the first quantity of the sample images is $N$, the first number of times of appearance of the ith sample feature point in the sample image library is $n_i$, and the first average number of times $idf(i)$ can be obtained through the formula (1).

Second, a second average number of times is determined according to a second number of times of appearance of the ith sample feature point in a jth key frame image and a second quantity of sample feature points included in the jth key frame image; wherein j is an integer being greater than or equal to 1, and the second average number of times is configured to represent a ratio of the ith sample feature point in sample feature points included in the jth key frame image. For example, the second number of times is $n_{ilt}$, the second quantity is $n_{lt}$, and the second average number of times $tf(i, lt)$ can be obtained through the formula (1).

Finally, according to the first average number of times and the second average number of times, a ratio of the sample feature points in the key frame images is obtained, and the ratio vector set is then obtained. For example, according to the formula (1), the first average number of times is multiplied by the second average number of times, a ratio vector can be obtained.

Operation S224, the ratio vector set and the key image feature set are stored to obtain the first map.

Herein, the ratio vector sets and the key image feature sets corresponding to the key frame images are stored in the first map, so as to facilitate adopting the ratio vector set to compare with a ratio vector set corresponding to a key frame image to be matched determined by a preset word bag model when positioning an image capturing apparatus, and thereby determining a key frame image corresponding to the second image feature which is highly similar with the key frame image to be matched from the key image feature set.

The above operation S221 to operation S224 provide a process of constructing local maps, such as the first map and the second map. By repeating the above operation S221 to operation S224, the second map can be obtained, and a map corresponding to any scene can also be obtained.

In this embodiment of the present application, for discrete or continuous scenes of sample images, different methods of selecting key frame images are adopted, so as to ensure effectivity of selected key frame images. Thus, image features are extracted from the key frame images to construct the first map, so as to ensure accuracy of the first map.

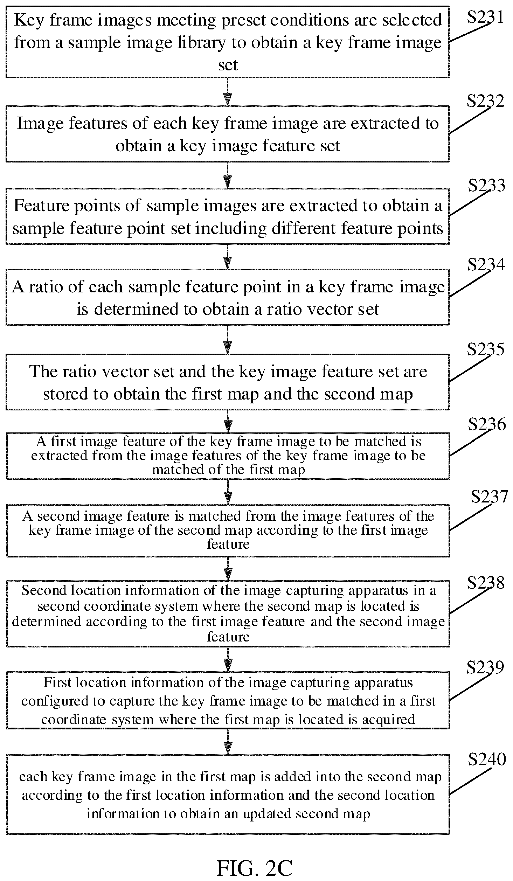

One embodiment of the present application provides a map update method. FIG. 2C is another schematic flow chart of implementation of a map update method according to an embodiment of the present application, as shown in FIG. 2C, the method includes the following operations.

Operation S231, key frame images meeting preset conditions are selected from a sample image library to obtain a key frame image set.

Operation S232, image features of each key frame image are extracted to obtain a key image feature set.

Operation S233, feature points of sample images are extracted to obtain a sample feature point set including different feature points.

Operation S234, a ratio of each sample feature point in a key frame image is determined to obtain a ratio vector set.

Operation S235, the ratio vector set and the key image feature set are stored to obtain the first map and the second map.

The above operation S231 to operation S235 complete a creating process of a preset map, and store the image features of the key frame images and the ratio vector set in the preset map, so as to facilitate retrieving the second image feature matching with the image feature of the key frame image to be matched from the image features of the key frame images of the second map according to the ratio vector set.

Operation S236, a first image feature of the key frame image to be matched is extracted from the image features of the key frame image to be matched of the first map.

Herein, when positioning an image capturing apparatus, the first map and the second map need to be loaded at first.

Operation S237, a second image feature is matched from the image features of the key frame image of the second map according to the first image feature.

Operation S238, second location information of the image capturing apparatus in a second coordinate system where the second map is located is determined according to the first image feature and the second image feature.

The above operation S236 to operation S238 provide a process of realizing positioning for the image capturing apparatus. In this process, by adopting the second image feature being highly similar with the first image feature, which is matched from the key frame images stored in the preset map, and then using the 2D location information and the 3D location information in the two image features, the second location information of the image capturing apparatus in a second coordinate system can be finally determined.

Operation S239, first location information of the image capturing apparatus configured to capture the key frame image to be matched in a first coordinate system where the first map is located is acquired.

Operation S240, each key frame image in the first map is added into the second map according to the first location information and the second location information to obtain an updated second map.

In this embodiment of the present application, both the 2D and 3D location information of the key frame image are adopted to ensure accuracy of a positioning result for the image capturing apparatus, a rate of success of positioning is high and a robust is strong. In this way, the key frame image in the first map is merged in the second map, and merging accuracy of the merged map is ensured.

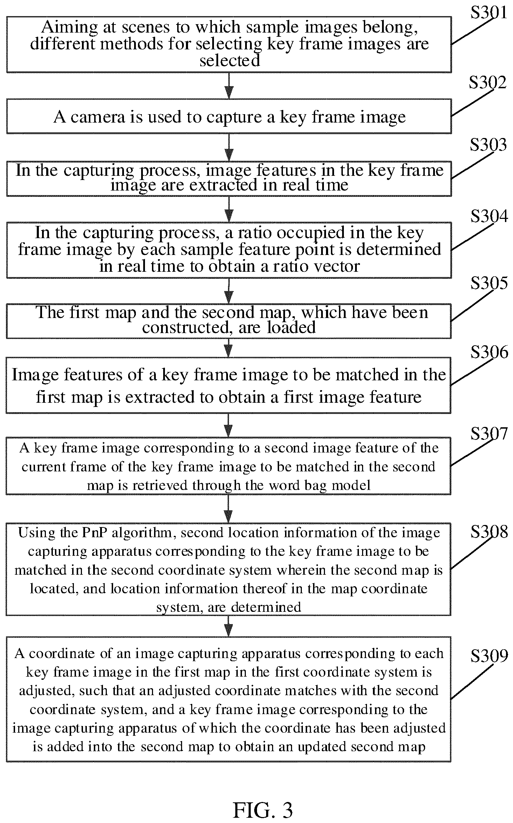

One embodiment of the present application provides a map update method. FIG. 3 is another schematic flow chart of implementation of a map update method according to an embodiment of the present application, as shown in FIG. 3, the method includes the following operations.

Operation S301, aiming at scenes to which sample images belong, different methods for selecting key frame images are selected.

Herein, the scenes to which the sample images belong include: discrete scenes or continuous scenes; the methods for selecting key frame images include two types: manual selection and automatic selection. Manual selection requires a map creator to manually select key frame images that need to be included in the map, while automatic selection is a method of automatically selecting an image as a key frame image based on a frame rate or a parallax displacement. In an image feature extraction process for key frame images, 150 FAST feature corner points are extracted from each key frame image, and a ratio of the same corner point existing in two continuous key frame images is defined as a corner tracking rate. In this embodiment of the present application, scenes with an ordered key frame image sequence and an average corner tracking rate being greater than 30% are defined as continuous scenes, otherwise they are discrete scenes. A method of selecting key frame images of continuous scene uses an automatic selection method; while a method of selecting key frame images of discrete scenes uses a manual selection method. The continuous scenes are suitable for a single indoor environment, such as a bedroom, a living room, a single conference room, etc.; the discrete scenes are more suitable for use in multiple indoor environments, such as multiple rooms in a building, multiple conference rooms on one floor, etc. In a process of constructing a map, strategies of selecting key frames for continuous scenes and for discrete scenes are different, and the applicable scenes are different. In this way, aiming at indoor discrete or continuous scenes, different methods of selecting key frame images are used to extract image features for map construction, so that the positioning process does not depend on external base station equipment, and has low cost, high positioning accuracy, and strong robustness.

Operation S302, a camera is used to capture a key frame image.

Herein, the camera can be a single-eyed camera, and can also be a double-eyed camera.

Operation S303, in the capturing process, image features in the key frame image are extracted in real time.

Herein, image feature extraction is a process of interpreting and annotating key frame images. In the operation S303, 2D location information, 3D location information, and identification information of feature points of the key frame image (i.e., descriptor information of the feature points) need to be extracted; among them, the 3D location information of the feature points of the key frame image is obtained by mapping the 2D location information of the feature points of the key frame image in a three-dimensional coordinate system where the preset map is located. For example, multiple 2D feature points are extracted from the key frame image, the number of extraction is 150 (150 is an empirical value; if the number of feature points is too small, a tracking failure rate is high; if the number of feature points is too large, efficiency of the algorithm is influenced), which is used for image tracking; and descriptor extraction is performed for the feature points and used for matching the feature points; secondly, the 3D location information (i.e., depth information) of the feature points are obtained by calculation using the triangulation method, and is used to determine the location of the capturing camera.

Operation S304, in the capturing process, a ratio occupied in the key frame image by each sample feature point is determined in real time to obtain a ratio vector.

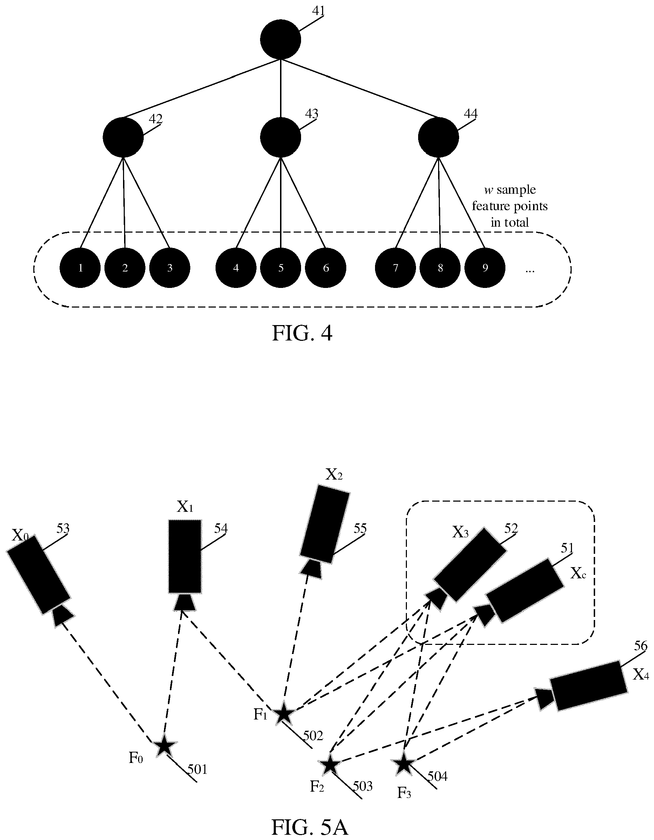

Herein, the operation S304 can be understood as: in the capturing process of the key frame image, for the current frame image, a ratio vector of the key frame image is extracted in real time. As shown in Figure 4, a word bag model is described in the form of a vocabulary tree. The word bag model includes a sample image library 41, which is a root node of the vocabulary tree, and sample images 42, 43, and 44, which are leaf nodes 42, 43; sample feature points 1 to 3 are different sample feature points in sample image 42, sample feature points 4 to 6 are different sample feature points in the sample image 43, and sample feature points 7 to 9 are different sample feature points in the sample image 44. In the word bag model, it is assumed that there are $w$ kinds of sample feature points, that is, $w$ is the number of kinds of the feature points extracted from the sample images of the word bag model. Therefore, there are totally $w$ sample feature points in the word bag model. Each sample feature point will score the key frame image, and score values are floating point numbers ranged from 0 to 1, so that each key frame image can be represented by a $w$-dimensional floating point number. This $w$-dimensional vector is the ratio vector $v_t^i$ output by the word bag model, and the scoring process is as shown in formula (1).

The above operation S301 to operation S304 construct an offline local map that depends on the key frame image, that is, the first map and the second map. The first map and the second map store the image features of the key frame image in a binary format (including: 2D location information, 3D location information and identification information, such as 2D coordinates, 3D coordinates, and descriptor information) to a local device, and when the image capturing apparatus needs to be processed, the first map and the second map will be loaded for use.

Operation S305, the first map and the second map, which have been constructed, are loaded.

Herein, the second coordinate system of the second map is used as a global coordinate system.

Operation S306, image features of a key frame image to be matched in the first map is extracted to obtain a first image feature.

Herein, the key frame image to be matched is any one of key frame images in the first map.

Operation S307, a key frame image corresponding to a second image feature of the current frame of the key frame image to be matched in the second map is retrieved through the word bag model.

Herein, that a key frame image corresponding to a second image feature of the current frame of the key frame image to be matched in the second map is retrieved through the word bag model can be understood as using feature information of the word bag model, that is, the ratio vector set, to retrieve a key frame image corresponding to a second image feature of the current frame of the key frame image to be matched in the second map.

The operation S307 can be implemented by the following process.

In a first step, similarity between the current frame of the key frame image to be matched and each key frame image in the second map is retrieved. A method for calculating the similarity $s(v_1, v_2)$ is as shown in formula (2):

$$s(v_1, v_2) = 1 - \frac{1}{2} \left| \frac{v_1}{|v_1|} - \frac{v_2}{|v_2|} \right| \qquad (2);$$

wherein $v_1$ and $v_2$ respectively represent a first ratio vector occupied in the current frame of the key frame image to be matched by each sample feature point included in the word bag model, and a second ratio vector occupied in a key frame image of the second map by each sample point. If the word bag model includes $w$ kinds of sample feature points, both the first ratio vector and the second ratio vector are w-dimensional vectors. By adopting similar key frame images of which similarity achieves a second threshold value selected from key frame images in the second map, a similar key frame image set is formed.

In a second step, similar key frame images of which time stamp differences are less than a third threshold value and similarity differences are less than a fourth threshold value are selected from the similar key frame image set and associated together to obtain an associated frame image (also referred to as an island).

Herein, the second step can be understood as selecting similar key frame images of which time stamps are close and similarity matching scores are close from the similar key frame image set and associating them together to form an island. In this way, the similar key frame image set is divided into multiple associated frame images (i.e., multiple islands). In the associated frame images, a ratio of similarity of the first key frame image to similarity of the last key frame image is very small. The similarity ratio is as shown in formular (3):

$$\eta(v_t, v_{t_j}) = \frac{s(v_t, v_{t_j})}{s(v_t, v_{t-\Delta t})} \qquad (3)$$

wherein $s(v_t, v_{tj})$ and $s(v_t, v_{t-\Delta t})$ respectively represent similarities of a former and a later key frame images with the key frame image to be matched of the current frame.

In a third step, a sum of similarity between an image feature of each key frame image included in a plurality of associated frame images and the first image feature is respectively determined, as shown in formular (4):

$$H(v_t, v_{t_i}) = \sum_{j=n_t}^{m_t} \eta(v_t, v_{t_j}) \tag{4}$$

In a fourth step, an associated frame image of which the sum of similarity is the greatest is determined as a target associated frame image of which similarity with the key frame image to be matched is the highest, and a key frame image corresponding to a second image feature of which similarity with the current frame of the key frame image to be matched is the highest is retrieved from the target associated frame image.

Operation S308, using the PnP algorithm, second location information of the image capturing apparatus corresponding to the key frame image to be matched in the second coordinate system wherein the second map is located, and location information thereof in the map coordinate system, are determined.

Herein, the operation S308 can be implemented by the following steps.

In a first step, regarding the $Nt_h$ feature point $F_{CN}$ of the current frame $X_c$ of the key frame image to be matched, all feature points of a key frame image $X_3$ corresponding to the second image feature are traversed, and an Euclidean distance between any two feature points in the key frame image corresponding to the second image feature is determined. As shown in FIG. 5A, the current frame of the key frame image to be matched is Xc51, and the key frame image corresponding to the second image feature matched with the current frame Xc51 is X352. An Euclidean distance between the feature points X053 and X154 is calculated to obtain an Euclidean distance F0501; an Euclidean distance between the feature points X154 and X255 is calculated to obtain an Euclidean distance F1502; an Euclidean distance between the feature points X255 and X352 is calculated to obtain an Euclidean distance F2503; and an Euclidean distance between the feature points Xc51 and X456 is calculated to obtain an Euclidean distance F3504.

In a second step, a set of which the Euclidean distance is the smallest (i.e., a target Euclidean distance set) is selected to perform threshold determination. If the Euclidean distance is less than a first threshold value, it is determined as a target Euclidean distance, and the target Euclidean distance set is formed; otherwise, the target Euclidean distance set is not formed, and it is skipped to the first step; until all feature points of $X_c$ are traversed, a third step is entered. For example, as shown in FIG. 5A, by comparing a plurality of Euclidean distances, a group of the smallest Euclidean distance combinations $\{F_1, F_2, F_3\}$ is obtained.

In a third step, the target Euclidean distance set is formed. It can be represented as $\{F_1, F_2, F_3\}$. If the number of elements of the target Euclidean distance set is greater than a fifth threshold value, a fourth step is performed; otherwise, the algorithm is ended, and location information of the matched frame $X_3$ is output.

In a fourth step, based on the target Euclidean distance set, functions in PnP are called to figure out location information of $X_c$ in a map coordinate system; wherein a process of the PnP algorithm is as follows.

Input of the PnP algorithm is 3D coordinates of feature points in a key frame image including the second image feature and 2D coordinates of feature points in the current frame of the key frame image to be matched, and output of the algorithm is a location of an image capturing apparatus corresponding to the current frame of the key frame image to be matched in a second coordinate system of the second map.

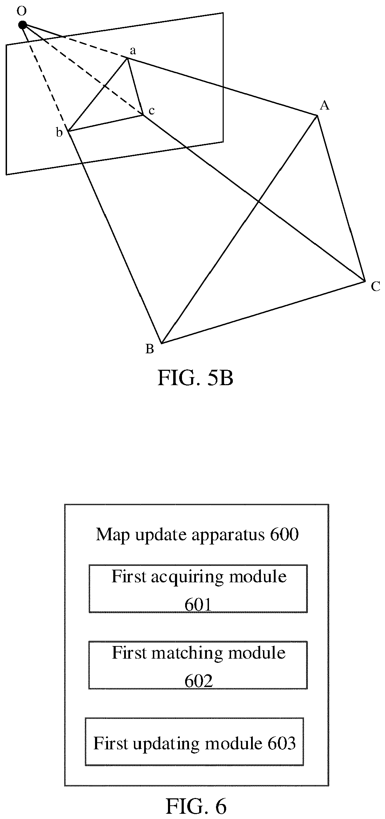

The PnP algorithm does not directly figure out a camera pose matrix according to matching pair sequences, but first obtains the 2D coordinates of the feature points in the current frame of the key frame image to be matched and the 3D coordinates of the feature points in the current frame of the key frame image to be matched in the current coordinate system, and then solves the camera pose based on the 3D coordinate system in the map coordinate system and the 3D coordinates of the feature points in the current frame of the key frame image to be matched in the current coordinate system. The solution of the PnP algorithm starts from the law of cosines. Suppose the center of the current coordinate system is a point $O$, and A, B, and C are three feature points in the current frame of the key frame image to be matched, as shown in Figure 5B:

according to the law of cosines, the relationship between A, B, and C is as shown in formula (5):

$$OA^2 + OB^2 - 2 \cdot OA \cdot OB \cdot \cos <a,b> = AB^2$$
$$OA^2 + OC^2 - 2 \cdot OA \cdot OC \cdot \cos <a,c> = AC^2$$
$$OB^2 + OC^2 - 2 \cdot OB \cdot OC \cdot \cos <b,c> = BC^2 \tag{5};$$

the above formulae are eliminated and divided by $OC^2$; suppose $x = \dfrac{OA}{OC}, y = \dfrac{OB}{OC}$, a formula (6) can be obtained:

$$x^2 + y^2 - 2 \cdot x \cdot y \cdot \cos <a,b> = \frac{AB^2}{OC^2}$$

$$x^2 + 1 - 2 \cdot x \cdot \cos <a,c> = \frac{AC^2}{OC^2}$$

$$y^2 + 1 - 2 \cdot y \cdot \cos <b,c> = \frac{BC^2}{OC^2} \qquad (6);$$

replacement is then performed; suppose $u = \frac{AB^2}{OC^2}, v = \frac{BC^2}{AB^2}, w = \frac{AC^2}{AB^2}$, a formula (7) can be obtained:

$$x^2 + y^2 - 2 \cdot x \cdot y \cdot \cos <a,b> = u^2$$

$$x^2 + 1 - 2 \cdot x \cdot \cos <a,c> = wu$$

$$y^2 + 1 - 2 \cdot y \cdot \cos <b,c> = vu \qquad (7);$$

the formula (4) is respectively substituted into the formulae (6) and (7), and then formulae (8) and (9) are respectively obtained:

$$(1-w)x^2 - w \cdot y^2 - 2 \cdot x \cdot \cos <a,c> + 2 \cdot w \cdot x \cdot y \cdot \cos <a,b> + 1 = 0 \qquad (8);$$

$$(1-v)y^2 - v \cdot x^2 - 2 \cdot y \cdot \cos <b,c> + 2 \cdot v \cdot x \cdot y \cdot \cos <a,b> + 1 = 0 \qquad (9);$$

wherein, since 2D coordinates of A, B, and C are known, $w$, $v$, $\cos <a, c>$, $\cos <b, c>$, $\cos <a, b>$ are all known amounts; therefore, there are only two unknown amounts $x$, $y$, and values of $x$, $y$ can be obtained through the formulae (8) and (9); thus, values of OA, OB, and OC can be figured out, as shown in a formula (10):

$$x^2 + y^2 - 2 \cdot x \cdot y \cdot \cos <a,b> = \frac{AB^2}{OC^2}, x = \frac{OA}{OC}, y = \frac{OB}{OC} \qquad (10);$$

finally, 3D coordinates of the three feature points A, B, and C in the current three-dimensional coordinate system can be obtained, they can be respectively obtained by a formula (11):

$$A = \vec{a} \cdot |OA|$$

$$B = \vec{b} \cdot |OB|$$

$$C = \vec{c} \cdot |OC| \qquad (11);$$

after the 3D coordinates of the three feature points A, B, and C in the current three-dimensional coordinate system are obtained, by transformation from the map coordinate system to the current coordinate system, a location of the capturing apparatus is determined.

The above operation S305 to operation S308 load a constructed offline map for the key frame image to be matched captured by the image capturing apparatus, and retrieve the key frame image corresponding to the second image feature of the key frame image to be matched from the key frame images in the second map through the word bag model. Finally, the PnP algorithm is used to solve a precise pose of the current camera in the second map to determine the position and posture of the apparatus in the second coordinate system, so that the key frame image in the first map can be added to the second map more accurately to realize map update.

Operation S309, a coordinate of an image capturing apparatus corresponding to each key frame image in the first map in the first coordinate system is adjusted, such that an adjusted coordinate matches with the second coordinate system, and a key frame image corresponding to the image capturing apparatus of which the coordinate has been adjusted is added into the second map to obtain an updated second map.

Herein, first, first location information of the image capturing apparatus in the first coordinate system is determined; second, second location information of the image capturing apparatus in the second coordinate system is determined; third, based on the first location information and the second location information, a rotation matrix and a translation vector of the first coordinate system relative the second coordinate system is determined; the coordinate of the image capturing apparatus in the first coordinate system is adjusted using the rotation matrix and the translation vector, such that the adjusted coordinate of the image capturing apparatus matches with the second coordinate system.

After the operation S309, the operation S305 to the operation S309 are performed repeatedly, so that other local maps are merged into the second coordinate system (i.e., the global coordinate system) to complete merging of the global map.

In this embodiment of the present application, both the 2D coordinate and the 3D coordinate of the key frame image are considered. The 3D coordinate of the capturing apparatus can be provided in the positioning result, and positioning accuracy of the image capturing apparatus is improved; thus merging precision of merging the key frame image in the first map into the second map is ensured, such that robust of the updated map is strong.

One embodiment of the present application provides a map update apparatus, various modules included in the apparatus and various units included in each module can be implemented by a processor of a computer device, and of course, can also be implemented through specific logic circuits. In implementation processes, the processor can be a central processing unit (CPU), a microprocessor unit (MPU), a digital signal processor (DSP), a field programmable gate array (FPGA), and so on.

FIG. 6 is a structural schematic diagram of composition of a map update apparatus according to an embodiment of the present application. As shown in FIG. 6, the apparatus 600 comprises: a first acquiring module 601, a first mapping module 602, and a first updating module 603; wherein: the first acquiring module 601 is configured to acquire a first image feature in a first map; the first matching module 602 is configured to match a second image feature from a second map according to the first image feature; and the first updating module 603 is configured to add each key frame image in the first map into the second map according to the first image feature and the second image feature to obtain an updated second map.

In the above apparatus, the first acquiring module 601 comprises: a first extracting submodule configured to extract a key frame image to be matched in the first map and obtain the first image feature; wherein the key frame image to be matched is a key frame image in the first map; correspondingly, the first matching module 602 comprises: a first matching submodule configured to match a second image feature from image features of a key frame image of the second map according to the first image feature.

In the above apparatus, the first updating module 603 comprises: a first acquiring module configured to acquire first location information of an image capturing apparatus configured to capture the key frame image to be matched in a first coordinate system where the first map is located; a first determining submodule configured to determine second location information of the image capturing apparatus in a second coordinate system where the second map is located according to the first image feature and the second image feature; and a first updating submodule configured to add each key frame image in the first map into the second map according to the first location information and the second location information to obtain an updated second map.

In the above apparatus, the first updating submodule comprises: a first determining unit configured to determine a transformation relationship between the first coordinate system and a second coordinate system according to the first location information and the second location information; a first adjusting unit configured to adjust a coordinate of an image capturing apparatus corresponding to each key frame image in the first map in the first coordinate system according to the transformation relationship, such that an adjusted coordinate of an image capturing apparatus corresponding to each key frame image matches with the second coordinate system; and a first adding unit configured to add a key frame image corresponding to each image capturing apparatus with an adjusted coordinate into the second map to obtain the updated second map.

In the above apparatus, scene information corresponding to the first map is at least partially the same as scene information corresponding to the second map.

In the above apparatus, the first image feature comprises 2D location information, 3D location information, and identification information of feature points of a key frame image in the first map; the second image feature comprises 2D location information, 3D location information, and identification information of feature points of a key frame image in the second map; wherein the 3D location information is obtained by mapping the 2D location information into a coordinate system where the 2D location information is located.

In the above apparatus, the first extracting submodule comprises: a first extracting unit configured to extract feature points of each key frame image in the first map to obtain a feature point set; a second determining unit configured to determine identification information of each feature point in the feature point set and 2D location information of each feature point in the key frame image; and a first mapping unit configured to respectively map each 2D location information into a coordinate system where the first map is located to obtain 3D location information of each feature point.

In the above apparatus, the first matching submodule comprises: a third determining unit configured to respectively determine ratios occupied by different sample feature points in the feature point set to obtain a first ratio vector; a first acquiring unit configured to acquire a second ratio vector, wherein the second ratio vector is a ratio occupied by the plurality of sample feature points in feature points included in a key frame image of the second map; and a first matching unit configured to match a second image feature from image features of a key frame image of the second map according to the first image feature, the first ratio vector, and the second vector.

In the above apparatus, the first matching unit comprises: a first determining subunit configured to determine a similar image feature of which similarity with the first image feature being greater than a second threshold value from image features of a key frame image of the second map according to the first ratio vector and the second ratio vector; a second determining subunit configured to determine a similar key frame image to which the similar image feature belongs and obtain a similar key frame image set; and a first selecting subunit configured to select a second image feature of which similarity with the first image feature meets a preset similarity threshold value from image features of the similar key frame image.

In the above method, the first selecting subunit is configured to: determine a time difference between captured time of at least two similar key frame images, and similarity differences of image features of the at least two similar key frame images respectively relative to the first image feature; associate similar key frame images of which the time differences are less than a third threshold value and the similarity differences are less than a fourth threshold value to obtain an associated frame image; and select a second image feature of which similarity with the first image feature meets a preset similarity threshold value from image features of the associated frame image.

In the above method, the first selecting subunit is configured to: respectively determine a sum of similarity between an image feature of each key frame image included in a plurality of associated frame images and the first image feature; determine an associated frame image of which the sum of similarity is the greatest as a target associated frame image of which similarity with the key frame image to be matched is the highest; and according to identification information of feature points of the target associated frame image and identification information of feature points of the key frame image to be matched, select a second image feature of which similarity with the first image feature meets a preset similarity threshold value from image features of the target associated frame image.

In the above apparatus, the apparatus further comprises: a first determining module configured to determine a target Euclidean distance being less than a first threshold value between every two feature points included in a key frame image corresponding to the second image feature to obtain a target Euclidean distance set; correspondingly, the first determining submodule comprises: a fourth determining module configured to: if the number of target Euclidean distances included in the target Euclidean distance set is greater than a fifth threshold value, determine the second location information according to 3D location information of feature points of a key frame image corresponding to the second image feature and 2D location information of feature points of a key frame image corresponding to the first image feature.

In the above apparatus, the apparatus further comprises: a first selecting module configured to select key frame images meeting preset conditions from a sample image library to obtain a key frame image set; a first extracting module configured to extract image features of each key frame image to obtain a key image feature set; a second extracting module configured to extract feature points of sample images to obtain a sample feature point set including different feature points; a second determining module configured to determine a ratio of each sample feature point in a key frame image to obtain a ratio vector set; and a first storing module configured to store the ratio vector set and the key image feature set to obtain the first map.

In the above apparatus, the apparatus further comprises: a second selecting module configured to select a preset number of corner points from the sample images; a third determining module configured to: if the number of identical corner points included in two sample images with adjacent captured time is greater than or equal to a sixth threshold value, determine that scenes corresponding to the sample images are continuous scenes; and a fourth determining module configured to: if the number of identical corner points included in two sample images with adjacent captured time is less than the sixth threshold value, determine that scenes corresponding to the sample images are discrete scenes.

In the above apparatus, the first selecting module comprises: a first selecting submodule configured to: if scenes corresponding to the sample images are discrete scenes, select key frame images from the sample image library according to an input selecting instruction; and a second selecting submodule configured to: if the scenes corresponding to the sample images are continuous scenes, select key frame images from the sample image library according to a preset frame rate or parallax displacement.

In the above apparatus, the second determining module comprises: a second determining submodule configured to determine a first average number of times according to a first quantity of sample images included in the sample image library and a first number of times of appearance of an ith sample feature point in the sample image library; wherein i is an integer being greater than or equal to 1, and the first average number of times is configured to represent an average number of times of appearance of the ith sample feature point in each sample image; a third determining submodule configured to determine a second average number of times according to a second number of times of appearance of the ith sample feature point in a jth key frame image and a second quantity of sample feature points included in the jth key frame image; wherein j is an integer being greater than or equal to 1, and the second average number of times is configured to represent a ratio of the ith sample feature point in sample feature points included in the jth key frame image; and a fourth determining module configured to: according to the first average number of times and the second average number of times, obtain a ratio of the sample feature points in the key frame images, and obtain the ratio vector set.

The above description of apparatus embodiments is similar to the above description of method embodiments, and have advantageous effect similar to that of the method embodiments. For technical details not disclosed in the apparatus embodiments of the present application, please understand with reference to the description of method embodiments of the present application.

It should be noted that, in the embodiments of the present application, if the above map update method is implemented in the form of a software function module and sold or used as an independent product, it can also be stored in a computer readable storage medium. Based on this understanding, the technical solutions of the embodiments of the present application essentially, or parts making contribution to related art, can be embodied in the form of a software product. The computer software product is stored in a storage medium and includes a plurality of instructions configured to enable an automatic test line for devices containing the storage medium to execute all or parts of the methods described in the embodiments of the present application. The aforementioned storage media include: U-disks, mobile hard disks, read only memories (ROM), magnetic disks, optical disks, and other media that can store program codes.

Correspondingly, one embodiment of the present application further provides a computer readable storage medium which stores a computer program; the computer program, when being executed by a processor, implements the operations in the map update methods provided by the above embodiments. It should be pointed out here that the description of the above storage medium and device embodiment is similar to the description of the above method embodiment, and has similar beneficial effect as that of the method embodiments. For technical details not disclosed in the storage medium and device embodiments of the present application, please refer to the description of the method embodiments of the present application for understanding. It should be understood that "one embodiment" or "an embodiment" mentioned throughout the specification means that a specific feature, structure, or characteristic related to the embodiment is included in at least one embodiment of the present application. Therefore, the appearances of "in one embodiment" or "in an embodiment" in various places throughout the specification do not necessarily refer to the same embodiment. In addition, these specific features, structures, or characteristics can be combined in one or more embodiments in any suitable manner. It should be understood that in the various embodiments of the present application, the sizes of the sequence numbers of the above-mentioned processes do not mean their orders of execution, and the execution order of each process should be determined by its function and internal logic and should not form any limitation to implementation processes the embodiments of the present application. The serial numbers of the above embodiments of the present application are only for description, and do not represent superiority or inferiority of the embodiments. It should be noted that in this disclosure, the terms "include", "comprise" or any other variants thereof are intended to cover non-exclusive inclusion, so that a process, method, article or device including a series of elements not only includes those elements, but also includes other elements that are not explicitly listed, or further includes elements inherent to the process, method, article, or device. If there are no more restrictions, an element defined by the sentence "including a..." does not exclude the existence of other similar elements in the process, method, article, or device that includes the element.

In the several embodiments provided by the present application, it should be understood that the disclosed devices and methods may be implemented in other ways. The device embodiments described above are merely illustrative. For example, the division of the units is only a logical function division, and there may be other divisions in actual implementation, for example, multiple units or components can be combined, or can be integrated into another system; or some features can be ignored or not implemented. In addition, coupling, or direct coupling, or communication connection among the shown or discussed components may be indirect coupling or communication connection through some interfaces, devices or units, and may be in electrical, mechanical or other forms. The units described above as separate components may or may not be physically separated, and the components displayed as units may or may not be physical units; they may be located in one place and may also be distributed on multiple network units; Some or all of the units may be selected according to actual needs to achieve purposes of the solutions of the embodiments of the present application. In addition, the functional units in the embodiments of the present application can be all integrated into one processing unit, or each unit can be individually used as a unit, or two or more units can be integrated into one unit; the above-mentioned integrated unit can be implemented in the form of hardware, and can also be implemented in the form of hardware with software functional units.

One of ordinary skill in the art can understand that all or some of the steps of the above method embodiments can be implemented by a program instructing relevant hardware. The foregoing program can be stored in a computer readable storage medium. When the program is executed, the steps including the foregoing method embodiments are executed; and the foregoing storage medium includes: a mobile storage device, a read only memory (ROM), a magnetic disk, an optical disc, and other media that can store program codes. Alternatively, if the aforementioned integrated unit of the present application is implemented in the form of a software function module and sold or used as an independent product, it may also be stored in a computer readable storage medium. Based on this understanding, the technical solutions of the embodiments of the present application essentially, or parts making contribution to related art, can be embodied in the form of a software product. The computer software product is stored in a storage medium and includes a plurality of instructions configured to enable an automatic test line for devices to execute all or parts of the methods described in the embodiments of the present application. The aforementioned storage media include: mobile storage devices, read only memories (ROM), magnetic disks, optical disks, and other media that can store program codes.

The above described are only the embodiments of the present application, but the protection scope of the present application is not limited to this. Any one skilled in the art can easily think of changes or replacements within the technical scope disclosed by the present application, they should be all covered in the protection scope of the present application. Therefore, the protection scope of the present application should be subject to the protection scope of claims.

Industrial Applicability

In embodiments of the present application, at first, a first image feature in a first map is acquired; afterwards, a second image feature is matched from a second map according to the first image feature; and finally, each key frame image in the first map is added into the second map according to the first image feature and the second image feature to obtain an updated second map. In this way, by extracting an image feature of a key frame image in a first map in local maps and matching the image feature with an image feature of a key frame image in another map, a key frame image corresponding to a second image feature can be obtained. Thus, based on matched image features in different maps, a plurality of maps are merged, so as to implement map updating and improve precision of updated maps.

**Claims**

1. A map update method, comprising:

   acquiring a first image feature in a first map;
   matching a second image feature from a second map according to the first image feature, wherein scene information corresponding to the first map is partially the same as scene information corresponding to the second map; and
   adding each key frame image in the first map into the second map according to the first image feature and the second image feature to obtain an updated second map.

2. The method according to claim 1, wherein the acquiring a first image feature in a first map comprises:

   extracting a key frame image to be matched in the first map and obtaining the first image feature; wherein the key frame image to be matched is a key frame image in the first map;
   correspondingly, the matching a second image feature from a second map according to the first image feature comprises:
   according to the first image feature, matching a second image feature from image features of a key frame image of the second map.

3. The method according to claim 2, wherein the adding each key frame image in the first map into the second map according to the first image feature and the second image feature so as to obtain an updated second map comprises:

   acquiring first location information of an image capturing apparatus configured to capture the key frame image to be matched in a first coordinate system where the first map is located;
   determining second location information of the image capturing apparatus in a second coordinate system where the second map is located according to the first image feature and the second image feature; and
   adding each key frame image in the first map into the second map according to the first location information and the second location information to obtain an updated second map.

4. The method according to claim 3, wherein the adding each key frame image in the first map into the second map according to the first location information and the second location information to obtain an updated second map comprises:

determining a transformation relationship between the first coordinate system and a second coordinate system according to the first location information and the second location information;
adjusting a coordinate of an image capturing apparatus corresponding to each key frame image in the first map in the first coordinate system according to the transformation relationship, such that an adjusted coordinate of an image capturing apparatus corresponding to each key frame image matches with the second coordinate system; and
adding a key frame image corresponding to each image capturing apparatus with an adjusted coordinate into the second map to obtain the updated second map.

5. The method according to claim 1, wherein the first image feature comprises 2-Dimensional (2D) location information, 3-Dimensional (3D) location information, and identification information of feature points of a key frame image in the first map; the second image feature comprises 2D location information, 3D location information, and identification information of feature points of a key frame image in the second map; wherein the 3D location information is obtained by mapping the 2D location information into a coordinate system where the 2D location information is located.

6. The method according to claim 2, wherein the extracting a key frame image in the first map and obtaining the first image feature comprises:

extracting feature points of each key frame image in the first map to obtain a feature point set;
determining identification information of each feature point in the feature point set and 2D location information of each feature point in the key frame image; and
respectively mapping each 2D location information into a coordinate system where the first map is located to obtain 3D location information of each feature point.

7. The method according to claim 2, wherein the according to the first image feature, matching a second image feature from image features of a key frame image of the second map comprises:

respectively determining ratios occupied by different sample feature points in the feature point set to obtain a first ratio vector;
acquiring a second ratio vector, wherein the second ratio vector is a ratio occupied by the plurality of sample feature points in feature points included in a key frame image of the second map; and
according to the first image feature, the first ratio vector, and the second vector, matching a second image feature from image features of a key frame image of the second map.

8. The method according to claim 7, wherein the according to the first image feature, the first ratio vector, and the second vector, matching a second image feature from image features of a key frame image of the second map comprises:

according to the first ratio vector and the second ratio vector, determining a similar image feature of which similarity with the first image feature is greater than a second threshold value from image features of a key frame image of the second map;
determining a similar key frame image to which the similar image feature belongs and obtaining a similar key frame image set; and
selecting a second image feature of which similarity with the first image feature meets a preset similarity threshold value from image features of the similar key frame image.

9. The method according to claim 8, wherein the selecting a second image feature of which similarity with the first image feature meets a preset similarity threshold value from image features of the similar key frame image comprises:

determining a time difference between captured time of at least two similar key frame images, and similarity differences of image features of the at least two similar key frame images respectively relative to the first image feature;
associating similar key frame images of which the time differences are less than a third threshold value and the similarity differences are less than a fourth threshold value to obtain an associated frame image; and

selecting a second image feature of which similarity with the first image feature meets a preset similarity threshold value from image features of the associated frame image.

10. The method according to claim 9, wherein the selecting a second image feature of which similarity with the first image feature meets a preset similarity threshold value from image features of the associated frame image comprises:

respectively determining a sum of similarity between an image feature of each key frame image included in a plurality of associated frame images and the first image feature;
determining an associated frame image of which the sum of similarity is the greatest as a target associated frame image of which similarity with the key frame image to be matched is the highest; and
according to identification information of feature points of the target associated frame image and identification information of feature points of the key frame image to be matched, selecting a second image feature of which similarity with the first image feature meets a preset similarity threshold value from image features of the target associated frame image.

11. The method according to any one of claims 3-10, wherein prior to the determining second location information of the image capturing apparatus in a second coordinate system where the second map is located according to the first image feature and the second image feature, the method further comprises:

determining a target Euclidean distance being less than a first threshold value between every two feature points included in a key frame image corresponding to the second image feature to obtain a target Euclidean distance set;
correspondingly, the determining second location information of the image capturing apparatus in a second coordinate system where the second map is located according to the first image feature and the second image feature comprises:
if the number of target Euclidean distances included in the target Euclidean distance set is greater than a fifth threshold value, determining the second location information according to 3D location information of feature points of a key frame image corresponding to the second image feature and 2D location information of feature points of a key frame image corresponding to the first image feature.

12. The method according to any one of claims 3-10, wherein prior to the extracting a key frame image in the first map and obtaining the first image feature, the method further comprises:

selecting key frame images meeting preset conditions from a sample image library to obtain a key frame image set;
extracting image features of each key frame image to obtain a key image feature set;
extracting feature points of sample images to obtain a sample feature point set including different feature points;
determining a ratio of each sample feature point in a key frame image to obtain a ratio vector set; and
storing the ratio vector set and the key image feature set to obtain the first map.

13. The method according to claim 12, wherein prior to the selecting key frame images meeting preset conditions from a sample image library to obtain a key frame image set, the method further comprises:

selecting a preset number of corner points from the sample images;
if the number of identical corner points included in two sample images with adjacent captured time is greater than or equal to a sixth threshold value, determining that scenes corresponding to the sample images are continuous scenes; and
if the number of identical corner points included in two sample images with adjacent captured time is less than the sixth threshold value, determining that scenes corresponding to the sample images are discrete scenes.

14. The method according to claim 12, wherein the selecting key frame images meeting preset conditions from a sample image library to obtain a key frame image set comprises:

if scenes corresponding to the sample images are discrete scenes, selecting key frame images from the sample image library according to an input selecting instruction; and
if the scenes corresponding to the sample images are continuous scenes, selecting key frame images from the sample image library according to a preset frame rate or parallax displacement.

**15.** The method according to claim 12, wherein the determining a ratio of each sample feature point in a key frame image to obtain a ratio vector set comprises:

determining a first average number of times according to a first quantity of sample images included in the sample image library and a first number of times of appearance of an ith sample feature point in the sample image library; wherein i is an integer being greater than or equal to 1, and the first average number of times is configured to represent an average number of times of appearance of the ith sample feature point in each sample image; determining a second average number of times according to a second number of times of appearance of the ith sample feature point in a jth key frame image and a second quantity of sample feature points included in the jth key frame image; wherein j is an integer being greater than or equal to 1, and the second average number of times is configured to represent a ratio of the ith sample feature point in sample feature points included in the jth key frame image; and according to the first average number of times and the second average number of times, obtaining a ratio of the sample feature points in the key frame images, and obtaining the ratio vector set.

**16.** A map update apparatus, comprising a first acquiring module, a first mapping module, and a first updating module; wherein:

the first acquiring module is configured to acquire a first image feature in a first map; the first matching module is configured to match a second image feature from a second map according to the first image feature; and the first updating module is configured to add each key frame image in the first map into the second map according to the first image feature and the second image feature to obtain an updated second map.

**17.** The apparatus according to claim 16, wherein the first acquiring module comprises:

a first extracting submodule configured to extract a key frame image to be matched in the first map and obtain the first image feature; wherein the key frame image to be matched is a key frame image in the first map; correspondingly, the first matching module comprises: a first matching submodule configured to match a second image feature from image features of a key frame image of the second map according to the first image feature.

**18.** The apparatus according to claim 16, wherein the first updating module comprises:

a first acquiring module configured to acquire first location information of an image capturing apparatus configured to capture the key frame image to be matched in a first coordinate system where the first map is located; a first determining submodule configured to determine second location information of the image capturing apparatus in a second coordinate system where the second map is located according to the first image feature and the second image feature; and a first updating submodule configured to add each key frame image in the first map into the second map according to the first location information and the second location information to obtain an updated second map.

**19.** A terminal comprising a memory and a processor; wherein the memory stores a computer program that can be run in the processor, and the processor, when executing the program, implements the operations of the method according to any one of claims 1-15.

**20.** A computer readable storage medium which stores a computer program; wherein the computer program, when being executed by a processor, implements the operations of the method according to any one of claims 1-15.

S101

A first image feature in a first map is acquired

S102

according to the first image feature, a second image feature is matched from a second map

S103

each key frame image in the first map is added into the second map according to the first image feature and the second image feature to obtain an updated second map

FIG. 1A

S121

A key frame image to be matched in a first map is extracted to obtain a first image feature

S122

According to the first image feature, a second image feature is matched from image features of a key frame image of the second map

S123

First location information of an image capturing apparatus configured to capture the key frame image to be matched in a first coordinate system where the first map is located is acquired

S124

Second location information of the image capturing apparatus in a second coordinate system where the second map is located is determined according to the first image feature and the second image feature

S125

According to the first location information and the second location information, each key frame image in the first map is added into the second map to obtain an updated second map

FIG. 1B

Feature points of each key frame image in the first map are extracted to obtain a feature point set — S201

Identification information of each feature point in the feature point set and 2D location information of each feature point in the key frame image are determined — S202

Each 2D location information is respectively mapped into a coordinate system where the first map is located to obtain 3D location information of each feature point — S203

Ratios occupied by different sample feature points in the feature point set are respectively determined to obtain a first ratio vector — S204

A second ratio vector is acquired — S205

According to the first image feature, the first ratio vector, and the second vector, a second image feature is matched from image features of a key frame image — S206

A target Euclidean distance being less than a first threshold value between every two feature points included in a key frame image corresponding to the second image feature is determined to obtain a target Euclidean distance set — S207

If the number of target Euclidean distances included in the target Euclidean distance set is greater than a fifth threshold value, the second location information is determined according to 3D location information of feature points of a key frame image corresponding to the second image feature and 2D location information of feature points of a key frame image corresponding to the first image feature — S208

First location information of an image capturing apparatus configured to capture the key frame image to be matched in a first coordinate system where the first map is located is acquired — S209

Each key frame image in the first map is added into the second map according to the first location information and the second location information to obtain an updated second map — S210

FIG. 2A

Key frame images meeting preset conditions are selected from a sample image library to obtain a key frame image set — S221

Image features of each key frame image are extracted to obtain a key image feature set — S222

A ratio of each sample feature point in a key frame image is determined to obtain a ratio vector set — S223

The ratio vector set and the key image feature set are stored to obtain the first map — S224

FIG. 2B

Key frame images meeting preset conditions are selected from a sample image library to obtain a key frame image set ――― S231

Image features of each key frame image are extracted to obtain a key image feature set ――― S232

Feature points of sample images are extracted to obtain a sample feature point set including different feature points ――― S233

A ratio of each sample feature point in a key frame image is determined to obtain a ratio vector set ――― S234

The ratio vector set and the key image feature set are stored to obtain the first map and the second map ――― S235

A first image feature of the key frame image to be matched is extracted from the image features of the key frame image to be matched of the first map ――― S236

A second image feature is matched from the image features of the key frame image of the second map according to the first image feature ――― S237

Second location information of the image capturing apparatus in a second coordinate system where the second map is located is determined according to the first image feature and the second image feature ――― S238

First location information of the image capturing apparatus configured to capture the key frame image to be matched in a first coordinate system where the first map is located is acquired ――― S239

each key frame image in the first map is added into the second map according to the first location information and the second location information to obtain an updated second map ――― S240

FIG. 2C

Aiming at scenes to which sample images belong, different methods for selecting key frame images are selected — S301

A camera is used to capture a key frame image — S302

In the capturing process, image features in the key frame image are extracted in real time — S303

In the capturing process, a ratio occupied in the key frame image by each sample feature point is determined in real time to obtain a ratio vector — S304

The first map and the second map, which have been constructed, are loaded — S305

Image features of a key frame image to be matched in the first map is extracted to obtain a first image feature — S306

A key frame image corresponding to a second image feature of the current frame of the key frame image to be matched in the second map is retrieved through the word bag model — S307

Using the PnP algorithm, second location information of the image capturing apparatus corresponding to the key frame image to be matched in the second coordinate system wherein the second map is located, and location information thereof in the map coordinate system, are determined — S308

A coordinate of an image capturing apparatus corresponding to each key frame image in the first map in the first coordinate system is adjusted, such that an adjusted coordinate matches with the second coordinate system, and a key frame image corresponding to the image capturing apparatus of which the coordinate has been adjusted is added into the second map to obtain an updated second map — S309

FIG. 3

FIG. 4

FIG. 5A

FIG. 5B

Map update apparatus 600

First acquiring module
601

First matching module
602

First updating module 603

FIG. 6

## INTERNATIONAL SEARCH REPORT

| International application No. |
| --- |
| **PCT/CN2020/096505** |

**A. CLASSIFICATION OF SUBJECT MATTER**

G06F 16/23(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 拼接, 合成, 拼合, 合并, 更新, 地图, 图像, 融合, 匹配, 特征, mosaic, composite, merge, update, map, image, fusion, match, feature

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109074757 A (CLOUDMINDS (SHENZHEN) ROBOTICS SYSTEMS CO., LTD.) 21 December 2018 (2018-12-21) description paragraphs [0017]-[0043], [0058]-[0064] | 1-8, 11, 16-20 |
| Y | CN 109086277 A (ZONGMU TECHNOLOGY (SHANGHAI) LIMITED COMPANY) 25 December 2018 (2018-12-25) description paragraphs [0026], [0039]-[0060] | 1-8, 11, 16-20 |
| A | CN 103123727 A (LENOVO (BEIJING) LTD.) 29 May 2013 (2013-05-29) entire document | 1-20 |
| A | CN 105447911 A (LENOVO (BEIJING) LTD.) 30 March 2016 (2016-03-30) entire document | 1-20 |
| A | CN 109029422 A (BEIJING MUYEBANG TECHNOLOGY CO., LTD.) 18 December 2018 (2018-12-18) entire document | 1-20 |
| A | CN 101275854 A (NEC CHINA CO., LTD.) 01 October 2008 (2008-10-01) entire document | 1-20 |
| A | CN 102289809 A (TSINGHUA UNIVERSITY) 21 December 2011 (2011-12-21) entire document | 1-20 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 August 2020** | **21 September 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/096505** |

**C.    DOCUMENTS CONSIDERED TO BE RELEVANT**

| Category* | Citation of document, with indication, where appropriate, of the relevant passages | Relevant to claim No. |
|---|---|---|
| A | CN 107167149 A (SHANGHAI YUDE TECHNOLOGY CO., LTD.) 15 September 2017 (2017-09-15) <br> entire document | 1-20 |
| A | CN 109285117 A (NANJING UNIVERSITY OF SCIENCE & TECHNOLOGY) 29 January 2019 (2019-01-29) <br> entire document | 1-20 |

Form PCT/ISA/210 (second sheet) (January 2015)

**INTERNATIONAL SEARCH REPORT**
Information on patent family members

International application No.

**PCT/CN2020/096505**

| Patent document cited in search report | | | Publication date (day/month/year) | Patent family member(s) | | | Publication date (day/month/year) |
|---|---|---|---|---|---|---|---|
| CN | 109074757 | A | 21 December 2018 | WO | 2020006685 | A1 | 09 January 2020 |
| CN | 109086277 | A | 25 December 2018 | | None | | |
| CN | 103123727 | A | 29 May 2013 | | None | | |
| CN | 105447911 | A | 30 March 2016 | | None | | |
| CN | 109029422 | A | 18 December 2018 | | None | | |
| CN | 101275854 | A | 01 October 2008 | US | 2008240513 | A1 | 02 October 2008 |
| | | | | JP | 2009003415 | A | 08 January 2009 |
| CN | 102289809 | A | 21 December 2011 | | None | | |
| CN | 107167149 | A | 15 September 2017 | | None | | |
| CN | 109285117 | A | 29 January 2019 | | None | | |

Form PCT/ISA/210 (patent family annex) (January 2015)

**REFERENCES CITED IN THE DESCRIPTION**

**Patent documents cited in the description**

- CN 201910578745